**Europäisches Patentamt**

**European Patent Office**

**Office européen des brevets**

(19)

(11) Veröffentlichungsnummer : **0 353 301 B1**

# (12) EUROPÄISCHE PATENTSCHRIFT

(45) Veröffentlichungstag der Patentschrift :
**29.07.92 Patentblatt 92/31**

(21) Anmeldenummer : **88904707.2**

(22) Anmeldetag : **27.01.88**

(86) Internationale Anmeldenummer :
**PCT/SU88/00024**

(87) Internationale Veröffentlichungsnummer :
**WO 89/07028 10.08.89 Gazette 89/18**

(51) Int. Cl.$^5$ : **B23H 1/00, B23H 7/00**

(54) **Vorrichtung zur elektroerosivon Herstellung von Löchern in Werkstücken.**

(43) Veröffentlichungstag der Anmeldung :
**07.02.90 Patentblatt 90/06**

(45) Bekanntmachung des Hinweises auf die
Patenterteilung :
**29.07.92 Patentblatt 92/31**

(84) Benannte Vertragsstaaten :
**CH DE FR GB IT LI SE**

(56) Entgegenhaltungen :
**FR-A- 2 572 665**
**GB-A- 992 392**
**GB-A- 1 505 065**
**SU-A- 657 946**
**"Metallorezhuschie stanki" pod redaktsiei**
**V.K. Tepinkichieva 1973, Mashinostroenie,**
**(Moscow), see pages 287, fig. 240**

(73) Patentinhaber : **INSTITUT ELEKTRONIKI**
**IMENI U.A.ARIFOVA AKADEMII NAUK**
**UZBEXKOI SSR**
**Akademgorodok**
**Tashkent, 700125 (SU)**
Patentinhaber : **SPETSIALIZIROVANNOE**
**KONSTRUKTORSKO-TEKHNOLOGICHESKOE**
**BJURO S OPYTNYM PROIZVODSTVOM**
**INSTITUTA ELEKTONIKI IMENI**
**U.A.ARIFOVA AKADEMII NAUK UZBEXKOI**
**SSR**
**Akademgorodok Tashkent, 700125 (SU)**

(72) Erfinder : **ABDUKARIMOV, Erkin Tukhtaevich**
**Ts-1, 52-6**
**Tashkent, 700000 (SU)**
Erfinder : **VAKHIDOV, Khaidar Akhmedovich**
**Massiv Chilanzar 2 kvartal, 23-6**
**Tashkent, 700115 (SU)**

(74) Vertreter : **Finck, Dieter**
**Patentanwälte v. Füner, Ebbinghaus, Finck**
**Mariahilfplatz 2 & 3**
**W-8000 München 90 (DE)**

EP 0 353 301 B1

**Beschreibung**

Die Erfindung betrifft eine Vorrichtung zur elektroerosiven Herstellung von Löchern in Werkstücken mit einer Werkzeugelektrode in Form eines Stabes, der unter Belassung eines Ringraumes von einem Mantel umhüllt ist und aus diesem herausragt, und mit einer Einrichtung zum Vorschub und Drehen des Stabes.

Eine solche, aus der PCT-SU 87/00099 bekannte Vorrichtung hat eine in einem Elektrodenhalter angeordnete Werkzeugelektrode in Form eines Stabes, welcher unter Belassung eines Zwischenraumes von einem Mantel umhüllt ist und aus diesem herausragt, und eine Einrichtung für einen Vorschub, zum Feststellen und für einen Ausgleich des Werkzeugelektrodenabbrandes. Diese Einrichtung weist je einen treibenden und getriebenen Schlitten auf, die miteinander kinematisch verbunden und zueinander parallel angeordnet sind. Jeder Schlitten besitzt zum abwechselnden starren Feststellen des Stabes der Werkzeugelektrode eine Klemme, die eine bewegliche und eine unbewegliche Backe aufweist. Im Gehäuse jedes Schlittens ist auf dem Niveau des Spaltes zwischen der beweglichen und der unbeweglichen Backe der Klemme eine durchgehende Zentrierbohrung ausgebildet, die mit einem Kanal in einem im Unterteil des Elektrodenhalters starr befestigten Stutzen fluchtet. In diesem Kanal ist der Stab der Werkzeugelektrode axial verschiebbar angeordnet. Der Mantel ist am Stutzen des Elektrodenhalters starr befestigt und erstreckt sich koaxial zum Stab. Der Elektrodenhalter ist am treibenden Schlitten starr befestigt. Wenn der Elektrodenhalter hohl ist, steht sein Hohlraum mit dem Kanal in Verbindung, in dem der Stab der Werkzeugelektrode untergebracht ist, so daß die Flüssigkeit durch den Zwischenraum zwischen dem Mantel und dem Stab der Werkzeugelektrode dem Bearbeitungsraum des Werkstückes zugeführt wird.

Während der elektroerosiven Bearbeitung kann sich der treibende Schlitten zusammen mit dem daran befestigten Mantel der Werkzeugelektrode gegenüber dem Stab der Werkelektrode, der durch den getriebenen Schlitten getragen wird, in der zum effektiven Vorschub der Werkzeugelektrode entgegengesetzten Richtung bewegen, wodurch gerade der abgebrannte Teil des Werkzeugelektrodenstabes ausgeglichen wird.

Die bekannte Vorrichtung mit einem Antrieb für den Vorschub und mit dem treibenden und dem getriebenen Schlitten, die die Werkzeugelektrode tragen, kann nur bei ortsfesten Anlagen eingesetzt werden. Mit der Vorrichtung ist es nicht möglich, tiefe Löcher in großformatigen Teilen sowie an schwer zugänglichen Stellen auszubilden.

Der Erfindung liegt deshalb die Aufgabe zugrunde, die Vorrichtung zur Herstellung von Löchern in Werkstücken der gattungsgemäßen Art mit einer Einrichtung für eine oszillierende Relativbewegung des Mantels dieser Elektrode gegenüber dem Stab der Werkzeugelektrode zu versehen, die derart aufgebaut ist, daß sich tiefe Löcher in großformatigen Teilen sowie an schwer zugänglichen Stellen herstellen lassen, wobei die Genauigkeit und die Beschaffenheit der Oberfläche der herzustellenden Löcher verbessert und die Leistung erhöht wird.

Diese Aufgabe wird ausgehend von der Vorrichtung der eingangs genannten Art dadurch gelöst, daß eine Einrichtung für eine oszillierende Bewegung des Mantels gegenüber dem Stab vorgesehen ist, welche mit der Einrichtung zum Vorschub und Drehen des Stabes mechanisch verbunden ist, daß die Einrichtung für eine oszillierende Bewegung des Mantels gegenüber dem Stab ein Hydraulikzylinder mit einem Kolben ist, der den Innenraum des Hydraulikzylinders in zwei Hohlräume unterteilt und an dem werkstückseitig der Mantel starr befestigt ist, daß mindestens einer der Hohlräume des Hydraulikzylinders mit einem System zum Zuführen und Abführen eines Arbeitsmittels verbunden ist und daß der Kolben mindestens einen Kanal aufweist, der mit dem Ringraum des Mantels der Werkzeugelektrode verbunden ist und durch den sich der Stab unter Belassung eines Zwischenraumes erstreckt.

Für die Überwachung der durch den Mantel zurückgelegten Weglänge im elektroerosiven Bearbeitungsvorgang ist es zweckmäßig, daß am Kolben des Hydraulikzylinders mindestens ein Magnetelement aus ferromagnetischem Werkstoff vorgesehen ist und daß an der Außenfläche des Hydraulikzylinders in Höhe des Magnetelementes ein Anzeigering aus magnetisierendem Werkstoff hin- und hergehend angeordnet ist.

Bei dieser Ausführung der Einrichtung für die oszillierende Bewegung des Mantels kann ein und dasselbe flüssige Arbeitsmittel sowohl als Energieträger für die Bewegung des Kolbens des Hydraulikzylinders mit dem Mantel der Werkzeugelektrode in die eine oder andere Richtung relativ zum Stab der Werkzeugelektrode für einen Ausgleich des während der elektroerosiven Bearbeitung abbrennenden Teiles, als auch als Arbeitsmittel, in welchem die Elektroerosion stattfindet, eingesetzt werden.

Für die Sicherung einer stabilen Lage der Vorrichtung auf dem zu bearbeitenden Werkstück ist es sinnvoll, zwischen der Stirnseite des Hydraulikzylinders und dem Werkstück einen Stützzapfen anzuordnen. Der Stützzapfen weist einen Durchgang durch die Werkzeugelektrode auf, wofür eine Zentrierhülse vorgesehen ist, welche eine abgesetzte Bohrung aufweist, von der die Bohrung mit dem kleineren Durchmesser für die Ausrichtung der Werkzeugelektrode dient und die Bohrung mit dem größeren Durchmesser gemeinsam mit der Werkzeugelektrode einen Ringspalt bildet, der mit einem Abflußstutzen verbunden ist. Vorteilhafterweise

2

EP 0 353 301 B1

hat der Stützzapfen werkstückseitig einen Dichtring. An der Ausmündung der Werkzeugelektrode aus dem Stützzapfen ist eine Ringnut mit einem Durchmesser ausgebildet, der größer als der Außendurchmesser der Zentrierhülse ist. Der von der Ringnut gebildete Raum steht mit dem Ringspalt der Zentrierhülse in Verbindung, wodurch das Arbeitsmittel zusammen mit den Abtragspartikeln der Elektroerosion aus dem Bearbeitungsraum des Werkstückes entfernt wird.

Zweckmäßigerweise ist zumindest in einem der Hohlräume des Hydraulikzylinders ein Federungskörper angeordnet, mit dessen Hilfe der Kolben hin und her bewegbar ist.

Erfindungsgemäß können somit tiefe Löcher in beliebigen elektrisch leitenden Werkstoffen sowie in großdimensionierten Werkstücken an schwer zugänglichen Stellen mit hoher Genauigkeit und Oberflächengüte bei hoher Leistung hergestellt werden. Die Vorrichtung hat ein geringes Gewicht und kleine Abmessungen, ist deshalb handlich und kann als tragbares Handgerät verwendet werden. Die kompakte Bauweise und die gefahrlose leichte Bedienbarkeit der Vorrichtung setzen keine hohe Qualifikation bei der Bedienunsperson voraus.

Anhand von Zeichnungen werden Ausführungsbeispiele der Erfindung näher erläutert. Es zeigt:

Fig. 1 im Axialschnitt eine erste Ausführungsform der Vorrichtung;

Fig. 2 im Axialschnitt eine zweite Ausführungsform der Vorrichtung;

Fig. 3 die Ausführungsformen der Vorrichtung von Fig. 1 und 2 in einer Ansicht in Richtung des Pfeils A in Fig. 1 und 2 und

Fig. 4 die Vorrichtung als Zusatzgerät für eine Anlage.

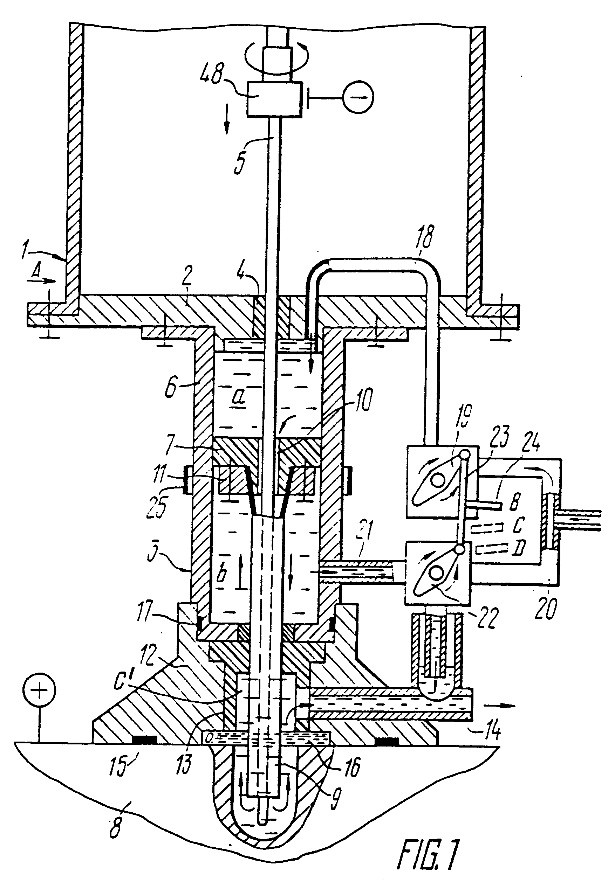

Die in Fig. 1 gezeigte Vorrichtung zur elektroerosiven Herstellung von Löchern in Werkstücken hat eine von einem Stab 5 und von einem diesen umhüllenden Mantel 9 gebildete Werkzeugelektrode sowie eine Einrichtung 1 zum Vorschub und Drehen des Stabes 5. Die Einrichtung 1 ist über einen Flansch 2 mit einer Einrichtung 3 für eine oszillierende Bewegung des Mantels 9 gegenüber dem Stab 5 mechanisch verbunden. In dem Flansch 2 ist eine Dichtungsbüchse 4 aus einem Dielektrikum eingepreßt, durch welche der Stab 5 der Werkzeugelektrode hindurchgeht.

Die Einrichtung 3 für die oszillierende Bewegung des Mantels 9 gegenüber dem Stab 5 der Werkzeugelektrode ist als Hydraulikzylinder 6 ausgebildet, dessen Innenraum durch den Kolben 7 in Hohlräume a und b unterteilt ist, wobei am Kolben 7 auf der Seite des Werkstückes 8 der Mantel 9 der Werkzeugelektrode starr befestigt ist. Dei Kolben 7 hat einen Kanal 10, der mit dem zwischen dem Stab 5 und dem Mantel 9 der Werkzeugelektrode gebildeten Ringraum verbunden ist und durch welchen sich der Stab 5 der Werkzeugelektrode unter Belassung eines Zwischenraumes erstreckt. Der Stab 5 ragt aus dem Mantel 9 während der Bearbeitung des Werkstücks 8 heraus. Der Mantel 9 ist am Kolben 7 über ein Magnetelement 11 in Form einer magnetischen Hülse aus ferromagnetischem Werkstoff durch Verschrauben befestigt.

Zwischen der Stirnseite des Hydraulikzylinders 6 und dem Werkstück 8 ist ein Stützzapfen 12 angeordnet, in welchem für einen Durchgang der Werkzeugelektrode eine Zentrierhülse 13 vorgesehen ist, welche eine abgesetzte Bohrung aufweist, von der die Bohrung mit dem kleineren Durchmesser für die Ausrichtung der Werkzeugelektrode dient und die Bohrung mit dem größeren Durchmesser gemeinsam mit dem Mantel 9 der Werkzeugelektrode einen Ringspalt C' bildet, der mit einem Abflußstutzen 14 verbunden ist. Auf der dem Werkstück 8 zugewandten Seite hat der Stützzapfen 12 einen Dichtring 15. An der Ausmündung der Werkzeugelektrode aus dem Stützzapfen 12 ist eine Ringnut 16 mit einem Durchmesser ausgebildet, der größer ist als der Außendurchmesser der Zentrierhülse 13. Der Innenraum o der Ringnut 16 steht mit dem Ringspalt C' der Zentrierhülse 13 in Verbindung und sorgt für die Entfernung des Arbeitsmittels mit den Abtragspartikeln der Elektroerosion aus dem Bearbeitungsraum des Werkstückes 8. An der Stoßverbindung des Hydraulikzylinders 6 und des Stützzapfens 12 ist ein Dichtring 17 vorgesehen.

Die Bewegung des Kolbens 7 des Hydraulikzylinders 6 zusammen mit dem Mantel 9 erfolgt durch ein System für die Arbeitsmittelzufuhr und -abfuhr, welches aus einem Stutzen 18, durch welchen der Hohlraum a des Hydraulikzylinders 6 über ein Ventil 19 mit einem Stutzen 20 für die Arbeitsmittelzufuhr verbunden ist, und aus einem Stutzen 21 besteht, durch den der Hohlraum b mit dem Abflußstutzen 14 und dem Stutzen 20 für die Zuführung der Betriebsflüssigkeit über ein Ventil 22 verbunden ist. Die Bewegung des Mantels 9 und des Kolbens 7 des Hydraulikzylinders 6 wird mittels einer Zugstange 23, die an Griffe an den Ventilen 19 und 22 angelenkt ist, durch die Betätigung eines an der Zugstange 23 starr befestigten Hebels 24 gesteuert.

An der Außenfläche des Hydraulikzylinders 6 ist ein Anzeigering 25 aus magnetisierendem Werkstoff hin- und hergehend angeordnet, welcher sich unter Einwirkung des Magnetfeldes des am Kolben 7 sitzenden hülsenförmigen Magnetelements 11 bewegt.

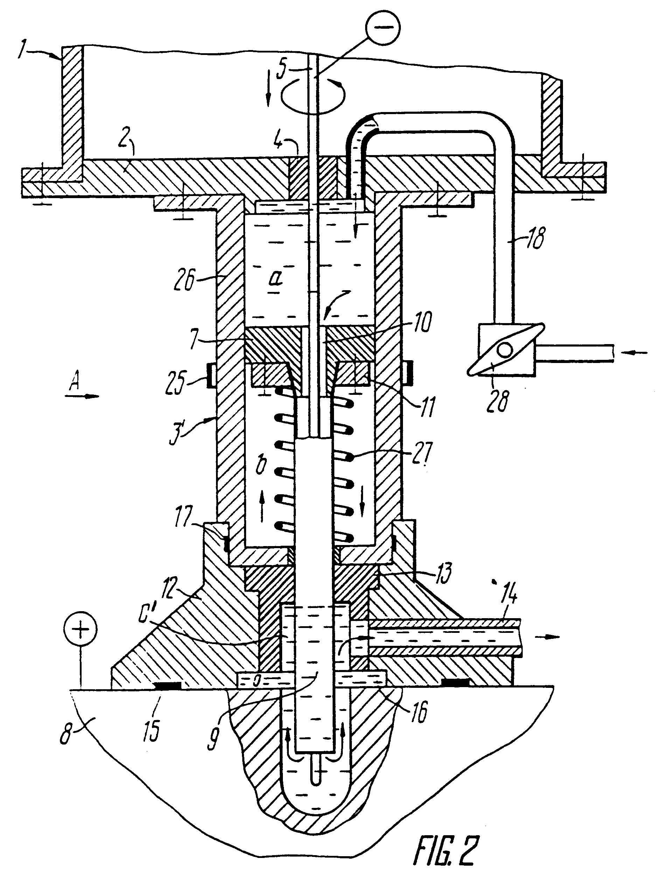

Bei der Ausführungsform von Fig. 2 hat die Einrichtung 3' für die oszillierende Bewegung des Mantels 9 einen einseitig wirkenden Hydraulikzylinder 26. Im Hohlraum b befindet sich eine Feder 27, die sich mit ihrem einen Ende an der Stirnseite des Hohlraumes b des Hydraulikzylinders 26 und mit ihrem anderen Ende an dem Kolben 7 abstützt und durch die hindurch sich die Werkzeugelektrode erstreckt. Im Hohlraum b befindet sich kein Arbeitsmittel. Das Arbeitsmittel wird in den Hohlraum a über das Ventil 28 mit einem Griff und den Stutzen

EP 0 353 301 B1

18 gedrückt. Die übrige Ausgestaltung der Vorrichtung entspricht der von Fig. 1.

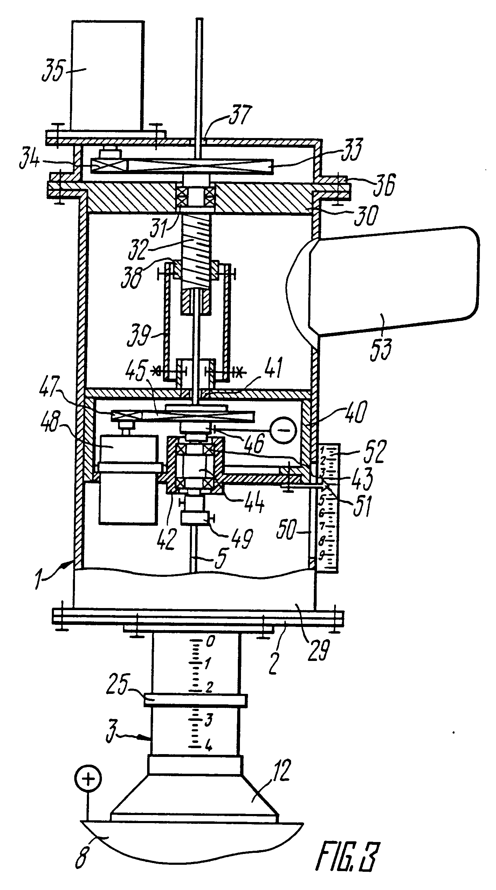

Die in Fig. 3 gezeigte Einrichtung 1 zum Vorschub und Drehen des Stabes 5 hat ein Gehäuse 29, dessen untere Stirnfläche über den Flansch 2 an der Einrichtung 3 für die oszillierende Bewegung des Mantels 9 befestigt ist. Im Deckel 30 des Gehäuses 29 ist in Wälzlagern 31 eine Schraubenspindel 32 mit einer Durchgangsbohrung gelagert, deren Endstück ein starr befestigtes Zahnrad 33 trägt. Das Zahnrad 33 ist mit einem Ritzel 34 kinematisch gekoppelt, welches auf die Welle eines Elektromotors 35 des Antriebs zum Vorschub des Stabes 5 der Werkzeugelektrode aufgesetzt ist. Der Elektromotor 35 ist am Gehäuse 29 mittels einer Konsole 36 angebracht, die mit einer zu der Schraubenspindel 32 fluchtenden Hülse 37 aus einem Dielektrikum bestückt ist. Innerhalb des Gehäuses 29 sitzt auf dem Gewinde der Schraubenspindel 32 eine Mutter 38, die über eine Hülse 39 an ein Gleitstück 40 angelenkt ist, in dessen Innerem eine dielektrische Hülse 41 fluchtend zu der Schraubenspindel 32 angeordnet ist. Am Gleitstück 40 ist ein Flansch 42 aus dielektrischem Material starr befestigt. In der Nabe des Flansches 42 ist in Wälzlagern 43 eine Welle 44 mit einem Durchgangskanal fluchtend zu der Schraubenspindel 32 gelagert. An einem Ende der Welle 44, die sich im Inneren des Gleitstücks 40 befindet, sitzt ein Zahnrad 45. Zwischen der Nabe des Flansches 42 und dem Zahnrad 45 ist auf der Welle 44 ein Schleifring 46 festgelegt, an den durch eine nicht gezeigte Stromquelle eine Spannung mit einem Potential angelegt wird, das bezogen auf das Potential des zu bearbeitenden Werkstückes 8 ein entgegengesetztes Vorzeichen hat. Das Zahnrad 45 ist mit einem Ritzel 47 eines am Flansch 42 befestigten Elektromotors 48 des Antriebs zum Drehen des Stabes 5 der Werkzeugelektrode kinematisch verbunden.

Das andere Ende der Welle 44 trägt eine fest sitzende Spannzange 49. Der Stab 5 der Werkzeugelektrode durchläuft die dielektrische Hülse 37 der Konsole 36, die Durchgangsbohrung der Schraubenspindel 32, die dielektrische Hülse 41 des Gleitstückes und dann weiter den Durchgangskanal der Welle 44, wobei ein sicherer elektrischer Kontakt und eine zuverlässige Befestigung des Stabes 5 der Werkzeugelektrode an der Welle 44 mit Hilfe der Spannzange 49 erzielt werden.

Für die Ermittlung der Tiefe des herzustellenden Loches im Werkstück 8 weist das Gehäuse 29 einen Schlitz 50 auf, dessen Länge mit dem maximalen Vorschubhub des Stabes 5 der Werkzeugelektrode übereinstimmt. Das Gleitstück 40 trägt einen Tiefenanzeiger 51 des herzustellenden Loches, welcher sich während des Vorschubes des Stabes 5 der Werkzeugelektrode im Schlitz 50 längs einer auswechselbaren Skale 52 verlagert, die am Gehäuse 29 längs des Schlitzes 50 angebracht ist. Die Skale 52 ist mit Rücksicht auf den Verschleiß des Stabes 5 der Werkzeugelektrode, den Werkstoff des Werkstückes 8 und des Stabes 5 der Werkzeugelektrode, den Durchmesser des Stabes 5 und des herzustellenden Loches sowie weitere Parameter geeicht, die bei der Herstellung von Löchern im Werkstück 8 feststellbar sind. Für das Festhalten der Vorrichtung auf dem Werkstück 8 in der Arbeitslage ist ein Handgriff 53 mit Bedienungsknöpfen vorgesehen.

Die Vorrichtung zur elektroerosiven Herstellung von Löchern in Werkstücken arbeitet wie folgt.

Vor der Betätigung der Vorrichtung ist der Stab 5 (Fig. 1) der Werkzeugelektrode in die Hülse 4 derart eingeführt, daß die Werkzeugelektrode aus der Stützfläche des Stützzapfens 12 nicht vorsteht. Danach befestigt man mit einem Werkzeug, z.B. mit einem Schraubenzieher, durch eine spezielle Öffnung im Gehäuse 29 der Einrichtung 1 zum Vorschub und Drehen des Stabes 5 hindurch den Stab 5 in der Spannzange 49 (Fig. 3). Dabei müssen der Kolben 7 (Fig. 1) und der Anzeigering 25 die obere Endstellung einnehmen, in welcher der Mantel 9 und der Stab 5 der Werkzeugelektrode nicht aus der Stützfläche des Stützzapfens 23 herausragen. In diesem Zustand wird die Vorrichtung auf das zu bearbeitende Werkstück 8 aufgesetzt. Anschließend wird der Hebel 24 aus der Position B in die Position C bewegt, wobei das Arbeitsmittel über die Stutzen 20, 18 und 21 in die Hohlräume a und b des Hydraulikzylinders 6 strömt. Das Arbeitsmittel strömt ins Innere des Mantels 9 und wird dann über den Abflußstutzen 14 nach außen abgeleitet. Danach wird der Antrieb zum Drehen der Werkzeugelektrode, d.h. der Elektromotor 48 in Fig. 3 betätigt, dessen Ritzel 47 über das Zahnrad 45 die Welle 44 rotieren läßt. Gemeinsam mit der Welle 44 dreht sich auch die Spannzange 49 mit dem Stab 5 der Werkzeugelektrode. Dann wird der Antrieb zum Vorschub des Stabes 5 der Werkzeugelektrode, d.h. der Elektromotor 35 betätigt. Das Ritzel 34 versetzt über das Zahnrad 33 die in den Lagern 31 gelagerte Spindel 32 in Drehung. Die drehende Spindel 32 verlagert die Mutter 38 zum zu bearbeitenden Werkstück 8 hin. Die Mutter 38 wirkt ihrerseits auf die Hülse 39 ein und bewegt das Gleitstück 40 zusammen mit dem rotierenden Stab 5 der Werkzeugelektrode in dieselbe Richtung und läßt das Arbeitsende des Stabes 5 der Werkzeugelektrode aus dem Mantel 9 um die erforderliche Größe herausragen. Gleichzeitig mit der Einschaltung des Vorschubes wird eine Spannung der nicht gezeigten Stromquelle über die Bürsten, den Schleifring 46, die Welle 44 und die Spannzange 49 an den Stab 5 der Werkzeugelektrode angelegt. Nach dem Erreichen eines erforderlichen Elektrodenabstandes bildet sich ein Funke. Es beginnt die Elektroerosion. Bei der Ausbildung des Loches durchströmt das Arbeitsmittel den Mantel 9 der Werkzeugelektrode (Fig. 1) sowie den Hohlraum des sich bildenden Loches im Werkstück 8 und strömt dann über die Ringnut 16 in den Ringspalt C und in den Abflußstutzen 14, wobei die Abtragspartikel der Elektroerosion aus dem zwischen den Elektroden liegenden Raum ununterbrochen mit dem Arbeitsmittel entfernt werden. Je nach Eintauchtiefe des Stabes 5 der Werkzeugelek-

4

trode im herzustellenden Loch des Werkstückes 8 muß der Mantel 9 der Werkzeugelektrode vorgeschoben werden (Fig. 1), damit die notwendige vorstehende Länge des Stabes 5 aus dem Mantel 9 der Werkzeugelektrode, d.h. der Abstand zwischen der Kante des Mantels 9 und dem Ende des daraus herausragenden Stabes 5 der Werkzeugelektrode konstant gehalten wird. Erreicht wird das dadurch, daß der Hebel 24 aus der Position C in die Position B gebracht wird, wodurch die Zuführung des Arbeitsmittels zum Hohlraum b eingestellt und dieser an den Abflußstutzen 14 angeschlossen wird. Dadurch, daß weiterhin Arbeitsmittel über den Stutzen 18 dem Hohlraum a zugeführt wird, bewegen sich der Kolben 7 und der Mantel 9 zum Werkstück hin. Der Abstand für die Verlagerung des Mantels 9 wird abhängig vom Ablesewert der Skale 52 festgelegt werden (Fig. 3), die den Vorschub des Stabes 5 der Werkzeugelektrode anzeigt. Die Verlagerung des Kolbens 7 (Fig. 1) des Hydraulikzylinders 6 zusammen mit dem Mantel 9 wird mit Hilfe des Anzeigeringes 25 überwacht, der sich gemeinsam mit ihm unter Einwirkung des Magnetfeldes des Magnetelementes 11 in Form der am Kolben 7 befestigten Hülse bewegt.

Bei der Ausführung von Fig. 2 findet die Bewegung des Mantels 9 der Werkzeugelektrode unter Einwirkung des Hydraulikzylinders 26 durch das Drehen des Griffes des Ventils 28 statt. Abhängig von der Drehrichtung des Griffes strömt das Arbeitsmittel entweder in den Hohlraum a, wobei es dabei den Kolben 7 mit dem Mantel 9 der Werkzeugelektrode in Richtung zum Werkstück 8 verschiebt und die Feder 27 zusammendrückt, oder wird die Zuführung des Arbeitsmittels eingestellt, so daß die Feder 27, indem sie sich entspannt, den Kolben 7 zusammen mit dem Mantel 9 in die Ausgangslage zurückführt. Dadurch strömt das Arbeitsmittel weiter ins Innere des Mantels 9 der Werkzeugelektrode. Das Bewegen und Anhalten des Kolbens 7 (Fig. 1, 2) und des Mantels 9 wird durch die Erhöhung oder die Verminderung des Druckes des flüssigen Arbeitsmittels im Hohlraum a jeweils durch die größere bzw. kleinere Menge des durch das Ventil 28 mit dem Griff fließenden Arbeitsmittels bewirkt.

Damit die Länge bei der Verlagerung des Kolbens 7 und des Mantels 9 exakt feststellbar ist, ist an der Wand des Hydraulikzylinders 6 eine Skale (Fig. 3) angebracht, längs der sich der Anzeigering 25 bewegt. Das Anhalten des Kolbens 7 (Fig. 1) mit dem Mantel 9 wird durch das Schieben des Hebels 24 in die Stellung C bewirkt. Wenn der Hebel 24 in dieser Stellung steht, ist der Hohlraum b mit dem darin befindlichen Arbeitsmittel abgeschlossen. Das Arbeitsmittel strömt über den Stutzen 18 in den Hohlraum a, so daß sich beiderseits des Kolbens 7 ein gleicher Druck einstellt und der Kolben 7 zur Ruhe kommt.

Zur Beendigung des Betriebs der Vorrichtung wird die Stromquelle abgeschaltet, wodurch die Werkzeugelektrode stromlos wird. Durch Schieben des Hebels 24 in die Stellung D wird der Hohlraum a des Hydraulikzylinders 6 abgesperrt, während dem Hohlraum b über den Stutzen 21 das Arbeitsmittel zugeleitet wird. Die Druckbeaufschlagung im Hohlraum b bewegt den Kolben 7 zusammen mit dem Mantel 9 zum Hohlraum a hin, wobei Arbeitsmittel aus dem Hohlraum a in den Ringraum zwischen Mantel 9 und Stab 5 der Werkzeugelektrode verdrängt wird, wodurch das Arbeitsmittel durch den Hohlraum o in den Abflußstutzen 14 gelangt. Der Mantel 9 wird so lange eingezogen, bis seine Kante mit der Stützfläche des Stützzapfens 12 bündig ist. Wenn es erforderlich ist, daß sich der Mantel 9 zur Seite hin bewegt, die zu dem Vorschub des Stabes 5 während des Betriebs der Vorrichtung entgegengesetzt ist, wird die Möglichkeit für das Einziehen des Mantels 9 ins Innere des Hydraulikzylinders 6 genutzt. Anschließend wird der Antrieb zum Vorschub des Stabes 5 in entgegengesetzter Richtung betätigt, d.h. der Stab 5 wird eingezogen. Sobald nun der Stab 5 mit seinem Ende zu der Stützfläche des Stützzapfens 12 bündig ist, wird die Vorrichtung voll abgeschaltet und die Arbeitsmittelzufuhr eingestellt.

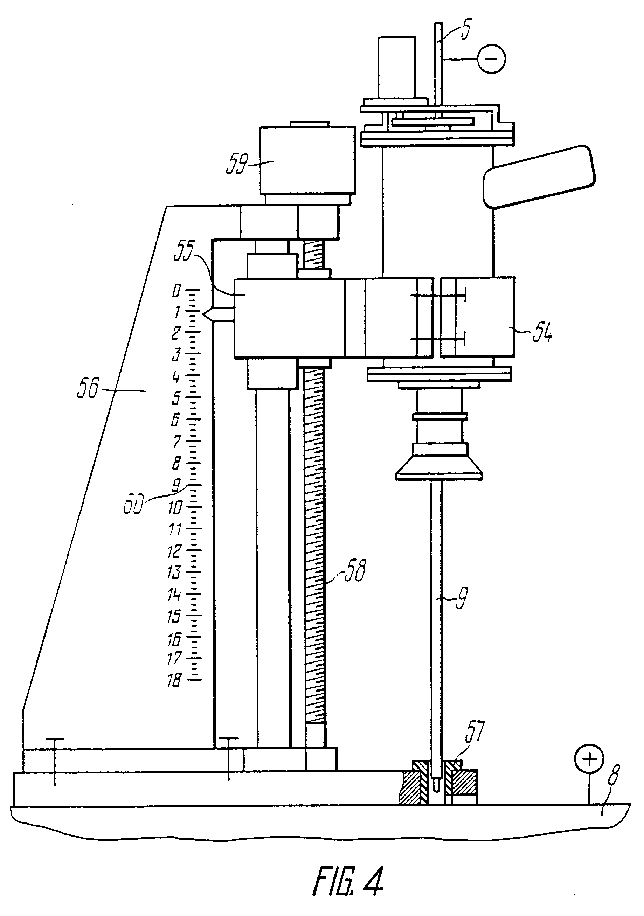

Wenn sehr tiefe Löcher oder Löcher mit hoher Genauigkeit und Oberflächengüte herzustellen sind, wird die Vorrichtung an eine ortsfeste Anlage 56 angebaut. Die Vorrichtung in Form eines Zusatzgerätes wird, wie in Fig. 4 gezeigt ist, an der Anlage 56 mittels eines Halbbügels 54 in Verbindung mit einem Kragstück 55 angebracht, wobei der Stab 5 und der Mantel 9 der Werkzeugelektrode mit Hilfe einer Bohrbuchse 57 auf dem Werkstück 8 ausgerichtet werden. Durch den Halbbügel 54 wird die Vorrichtung mechanisch mit einer Schraubenspindel 58 der Anlage 56 verbunden. Die Schraubenspindel 58 wird durch einen Antrieb 59 für den Vorschub in Bewegung gesetzt. Am Gehäuse der Anlage 56 ist eine Skale 60 zur Ermittlung der Vorschubhublänge der Vorrichtung vorgesehen. Die Länge des herausragenden Teiles des Mantels 9 muß mit der Tiefe des herzustellenden Loches übereinstimmen. Vor der Inbetriebnahme befindet sich die Vorrichtung in der oberen Endstellung, in welcher das Ende des Mantels 9 und der Stab 5 in die Bohrbuchse 57 einmünden. Dann wird Spannung an die Werkzeugelektrode angelegt und Arbeitsmittel in den Mantel 9 strömen gelassen. Nachdem der Antrieb zum Drehen des Stabes 5 eingeschaltet ist, wird der Antrieb 59 zum Vorschub der Vorrichtung betätigt, wodurch sich durch das Drehen der Schraubenspindel 58 der Anlage 56 das Kragstück 55 gemeinsam mit der Vorrichtung an den Führungen der Anlage 56 nach unten bewegt. Sobald der Elektrodenabstand groß genug ist, beginnt die Elektroerosion. Abhängig von der erreichten Tiefe des Loches wird der Stab 5 zum Ausgleich seines abgebrannten Teiles vorgeschoben, so daß das für die Elektroerosion notwendige Herausragen des Stabes 5 über die Kante des Mantels 9 konstant gehalten wird. Die jeweilige Tiefe des Loches ergibt sich aus der Anzeige der Skale 60 am Gehäuse der Anlage 56. Mit Hilfe der Schraubenspindel 58 kann die Vorrichtung auf und ab bewegt werden.

## Patentansprüche

1. Vorrichtung zur elektroerosiven Herstellung von Löchern in Werkstücken
– mit einer Werkzeugelektrode in Form eines Stabes (5), der unter Belassung eines Ringraumes von einem Mantel (9) umhüllt ist und aus diesem herausragt, und
– mit einer Einrichtung (1) zum Vorschub und Drehen des Stabes (5),
dadurch **gekennzeichnet,**
– daß eine Einrichtung (3, 3') für eine oszillierende Bewegung des Mantels (9) gegenüber dem Stab (5) vorgesehen ist, welche mit der Einrichtung (1) zum Vorschub und Drehen des Stabes (5) mechanisch verbunden ist,
– daß die Einrichtung (3, 3') für eine oszillierende Bewegung des Mantels (9) gegenüber dem Stab (5) ein Hydraulikzylinder (6, 26) mit einem Kolben (7) ist, der den Innenraum des Hydraulikzylinders (6, 26) in zwei Hohlräume (a, b) unterteilt und an dem werkstückseitig der Mantel (9) starr befestigt ist,
– daß mindestens einer der Hohlräume (a, b) des Hydraulikzylinders (6, 26) mit einem System (18 bis 22) zum Zuführen und Abführen eines Arbeitsmittels verbunden ist und
– daß der Kolben (7) mindestens einen Kanal (10) aufweist, der mit dem Ringraum des Mantels (9) der Werkzeugelektrode verbunden ist und durch den sich der Stab (5) unter Belassung eines Zwischenraumes erstreckt.

2. Vorrichtung nach Anspruch 1, dadurch **gekennzeichnet,**
– daß der Kolben (7) des Hydraulikzylinders (6, 26) mit mindestens einem Magnetelement (11) aus ferromagnetischem Werkstoff versehen ist und
– daß an der Außenfläche des Hydraulikzylinders (6, 26) auf dem Niveau des Magnetelementes (11) ein Anzeigering (25) aus magnetisierendem Werkstoff hin- und hergehend angeordnet ist.

3. Vorrichtung nach Anspruch 1 oder 2, dadurch ge**kennzeichnet,**
– daß zwischen der Stirnseite des Hydraulikzylinders (6, 26) und dem Werkstück (8) ein Stützzapfen (12) angeordnet ist,
– daß der Stützzapfen (12) einen Durchgang für die Werkzeugelektrode in Form einer Zentrierhülse (13) aufweist, welche eine abgesetzte Bohrung aufweist,
– von der die Bohrung mit dem kleineren Durchmesser für die Ausrichtung der Werkzeugelektrode dient und die Bohrung mit dem größeren Durchmesser zusammen mit der Werkzeugelektrode einen Ringspalt (C') bildet, der mit einem Abflußstutzen (14) verbunden ist,
– daß der Stützzapfen (12) werkstückseitig einen Dichtring (15) aufweist,
– daß an der Ausmündung der Werkzeugelektrode aus dem Stützzapfen (12) eine Ringnut (16) vorgesehen ist, deren Durchmesser größer ist als der Außendurchmesser der Zentrierhülse (13) und
– daß der von der Ringnut (16) gebildete Raum mit dem Ringspalt (C') der Zentrierhülse (13) in Verbindung steht, wodurch das Arbeitsmittel zusammen mit den Abtragspartikeln der Elektroerosion aus dem Bearbeitungsraum des Werkstückes (8) entfernt wird.

4. Vorrichtung nach einem der Ansprüche 1 bis 3, dadurch **gekennzeichnet,** daß mindestens in einem (b) der Hohlräume (a, b) des Hydraulikzylinders (26) ein Federungskörper (27) angeordnet ist, der die oszillierende Bewegung des Kolbens (7) bewirkt.

## Revendications

1. Dispositif pour la fabrication de trous dans des pièces d'oeuvre par électro-érosion , comprenant
– une électrode formant outil sous la forme d'une tige (5), qui, en maintenant un espace annulaire, est enveloppée par une chemise (9) et fait saillie vers l'extérieur à partir de celle-ci, et
– un dispositif (1) pour la poussée en avant et la rotation d'une tige (5),
**caractérisé** en ce
– qu'un dispositif (3, 3') est prévu pour un mouvement oscillant de la chemise (9) par rapport à la tige (5) et qui est relié mécaniquement avec le dispositif (1) pour la poussée en avant et la rotation de la tige (5),
– que le dispositif (3, 3') pour un mouvement oscillant de la chemise (9) par rapport à la tige (5) est constitué par un vérin hydraulique (6, 26) possédant un piston (7), qui divise l'espace interne du vérin hydraulique (6,26) en deux espaces creux (a, b) et sur lequel, côté pièce de travail, la chemise (9) est fixée de manière rigide,

– qu'au moins l'un des espaces creux (a, b) du vérin hydraulique (6, 26) est relié à un système (18 à 22) pour l'amenée et l'évacuation d'un milieu de travail et

– que le piston (7) présente au moins un conduit (10) qui est relié à l'espace annulaire de la chemise (9) de l'électrode d'outil et à travers lequel s'étend la tige (5) tout en maintenant un espace intermédiaire.

2. Dispositif selon la revendication 1, **caractérisé**

– en ce que le piston (7) du vérin hydraulique (6, 26) est pourvu d'au moins un élément formant aimant (11) en matériau ferromagnétique et

– en ce qu'il est prévu, sur la face externe du vérin hydraulique (6, 26) au niveau de l'élément formant aimant (11) un anneau indicateur (25) effectuant un mouvement de va-et-vient, en un matériau magnétisant.

3. Dispositif selon la revendication 1 ou 2, **caractérisé**

– en ce qu'un pivot à crapaudine (12) est disposé entre la face frontale du vérin hydraulique (6, 26) et la pièce de travail (B),

– en ce que le pivot à crapaudine (12) présente un passage pour l'électrode d'outil sous la forme d'un manchon de centrage (13) qui présente un alésage épaulé,

– de laquelle l'alésage du plus petit diamètre sert à l'orientation de l'électrode formant outil et l'alésage du diamètre plus grand forme conjointement avec l'électrode d'outil une fente annulaire (C'), qui est reliée à une tubulure d'écoulement (11),

– en ce que le pivot à crapaudine (12) présente, côté outil une bague d'étanchéité (15),

– qu'à la sortie de l'électrode d'outil du pivot à crapaudine (12) est prévue une rainure annulaire (16), dont le diamètre est plus grand que le diamètre externe du manchon de centrage (13), et

– en ce que l'espace formé par la rainure annulaire (16) est en liaison avec la fente annulaire (C') du manchon de centrage (13), par quoi le milieu de travail est évacué conjointement avec des particules d'érosion de l'électro-érosion de l'espace de traitement de la pièce de travail (B).

4. Dispositif selon l'une des revendications 1 à 3, **caractérisé** en ce qu'un élément à ressort (27) est disposé dans au moins l'un (b) des espaces creux (a, b) du vérin hydraulique (26) et qui produit le mouvement oscillant du piston (7).

## Claims

1. A device for making holes in workpieces by electroerosion

– with a tool electrode in the form of a rod (5), which is enclosed by a casing (9), leaving an annular space, and projects out of this casing (9), and

– with a device (1) for advancing and rotating the rod (5),

**characterised**

– in that a device (3, 3') is provided for moving the casing (9) in an oscillating manner relative to the rod (5), which device (3, 3') is mechanically connected to the device (1) for advancing and rotating the rod (5),

– in that the device (3, 3') for moving the casing (9) in an oscillating manner relative to the rod (5) is a hydraulic cylinder (6, 26) with a piston (7), which subdivides the interior space of the hydraulic cylinder (6, 26) into two cavities (a, b) and to which the casing (9) is attached rigidly on the side of the workpiece,

– in that at least one of the cavities (a, b) of the hydraulic cylinder (6, 26) is connected to a system (18 to 22) for supplying and carrying away a working substance and

– in that the piston (7) has at least one channel (10) which is connected to the annular space of the casing (9) of the tool electrode and through which the rod (5) extends, leaving an interspace.

2. A device according to Claim 1, **characterised**

– in that the piston (7) of the hydraulic cylinder (6, 26) is provided with at least one magnet element (11) made of ferromagnetic material and

– in that, on the outer surface of the hydraulic cylinder (6, 26) at the level of the magnet element (11), an indicator ring (25) made of magnetizing material is arranged so as to move to and fro.

3. A device according to Claim 1 or 2, **characterised**

– in that a supporting journal (12) is arranged between the front side of the hydraulic cylinder (6, 26) and the workpiece (8),

– in that the supporting journal (12) has a passage for the tool electrode in the form of a centering sleeve (13) which has a stepped hole,

– of which the hole with the smaller diameter serves to align the tool electrode and the hole with the larger diameter forms an annular gap (C') together with the tool electrode, this annular gap (C') being connected to an outlet nozzle (14),
– in that the supporting journal (12) has a sealing ring (15) on the side of the workpiece,
– in that an annular groove (16) is provided at the exit of the tool electrode from the supporting journal (12), the diameter of which annular groove (16) is larger than the external diameter of the centering sleeve (13) and
– in that the space formed by the annular groove (16) is in communication with the annular gap (C') of the centering sleeve (13), so that the working substance is removed from the machining space of the workpiece (8) together with the abraded particles produced by the electroerosion.

4. A device according to any one of Claims 1 to 3, **characterised** in that a spring body (27) is arranged in at least one (b) of the cavities (a, b) of the hydraulic cylinder (26), which spring body (27) produces the oscillating movement of the piston (7).

FIG. 1

FIG. 2

FIG.3

FIG. 4